# EUROPÄISCHE PATENTSCHRIFT

(11) **EP 1 785 252 B1**
(45) Veröffentlichungstag und Bekanntmachung des Hinweises auf die Patenterteilung: **03.09.2008**
(21) Anmeldenummer: 06022561.2
(22) Anmeldetag: 28.10.2006
(51) Int. Cl.: B29C 33/62, B01F 17/00

(54) **Wässriges Trennmittel und seine Verwendung bei der Herstellung von Polyurethan-Formkörpern**
Aqueous releasing agent and its use for producing moulded polyurethane articles
Agent de démoulage à base d'eau et son utilisation pour la fabrication de polyuréthane moulé

(30) Priorität: 12.11.2005 DE 102005054034
(43) Veröffentlichungstag der Anmeldung: 16.05.2007
(73) Patentinhaber: Evonik Goldschmidt GmbH, 45127 Essen (DE)
(72) Erfinder: Althoff, Ralf, 45721 Haltern (DE); Henning, Torsten, Dr., 19057 Schwerin (DE); Lammerting, Helmut, 58456 Witten (DE)

(56) Entgegenhaltungen:
- DE-A1- 2 702 930
- DE-A1- 4 020 036
- US-A- 4 473 403
- US-A- 4 936 917

## Beschreibung

Die Erfindung betrifft wässrige Trennmittel und ihre Verwendung bei der Herstellung von Polyurethan-Formkörpern.

Es ist bekannt, dass die zur Herstellung von Formkörpern verwendeten Polyurethansysteme gegenüber den verwendeten Formwerkstoffen, bevorzugt thermisch stark leitfähige Werkstoffe wie Metalle, eine starke Adhäsion zeigen. Daher benötigt man bei der Entformung der Polyurethan-Formkörper Trennmittel, die auf die mit Polyurethanen und/oder der Polyurethanreaktionsmischung in Berührung kommenden Formwandungen, aufgebracht werden.

Solche Trennmittel bestehen aus Dispersionen oder Emulsionen von Wachsen, Seifen, Ölen und/oder Siliconen in Lösungsmitteln wie Kohlenwasserstoffe oder Wasser.

Nach Aufbringen des Trennmittels auf die Form verdampft das Lösungsmittel und die nichtflüchtigen trennaktiven Substanzen bilden einen dünnen Trennfilm, der gewährleisten soll, dass der Polyurethan-Formkörper nach der Herstellung leicht aus der Form entnommen werden kann.

Neben der eigentlich benötigten Trennwirkung übernimmt das Trennmittel noch weitere Funktionen, so beeinflusst es auch sehr stark die Oberfläche des Polyurethan-Formkörpers, die feinporig bzw. glatt und gleichmäßig sein soll, unter anderem auch, um eine gute Beziehbarkeit der fertigen Formteile mit Stoffen oder Leder zu gewährleisten.

Um die Umweltbelastung mit organischem Material zu reduzieren, besteht ein hohes Interesse an Trennmitteln auf wässriger Basis, die frei von flüchtigem organischem Material sind. Die im Markt befindlichen wässrigen Trennmittel zeigen jedoch gegenüber klassischen, organische Lösungsmittel enthaltenden Trennmitteln den Nachteil, dass nach dem Verdampfen eines Großteils des Wassers immer ein dünner Wasserfilm in der Form zurückbleibt, der sich bei den üblichen Formtemperaturen von 45 bis 80 °C, bevorzugt 50 bis 75 °C, nicht verflüchtigt und mit den Isocyanatverbindungen des Polyurethansystems Reaktionen eingeht, die zu sehr harten Polyharnstoffverbindungen führen. Dadurch werden die Formoberflächen gestört. Sie erhalten einen sogenannten Aufbau von dem sie aufwändig gereinigt werden müssen.

Typische Beispiele wässriger Trennmittel mit guter Entformungswirkung sind beispielsweise beschrieben in DE-A-37 42 370 oder DE-A-40 20 036. Diese Mittel enthalten als trennwirksame Substanz ungesättigte oligomere oder polymere Kohlenwasserstoffe mit Molekulargewichten von mindestens 500 und Jodzahlen von mindestens 60, besonders bevorzugt flüssiges Polybutadien mit Molekulargewichten von ca. 3.000 und Jodzahlen von ca. 450.

Insbesondere nachteilig bei diesen Trennmitteln sind die auftretenden starken Verfärbungen, die durch Oxidation der Doppelbindungen hervorgerufen werden.

Ein weiteres Problem der oben zitierten Trennmittel ist das häufige Auftreten von Allergien bei Mitarbeitern, die mit diesen Trennmitteln oder den mit ihrer Hilfe hergestellten Formteilen arbeiten.

Diese Trennmittel zeigen neben dem oben beschriebenen Problem des Polyharnstoffaufbaus auf den Formoberflächen aber noch den weiteren Nachteil, dass die als zähfließendes Öl vorliegende trennwirksame Substanz die Arbeitsumgebung stark verschmutzt. Auf Maschinen und Anlagen bildet sich ein schlecht zu entfernender, klebriger Schmierfilm aus; auch bei großer Sorgfalt ist die Beschmutzung der Umgebung nicht mit Sicherheit zu vermeiden, so dass sich beispielsweise auf den Fußböden ein schlecht zu entfernender, rutschiger Schmierfilm ausbildet, der für die Mitarbeiter ein nicht akzeptables Gefahrenpotential bildet.

Durch die in den ungesättigten polymeren Kohlenwasserstoffen vorhandenen Doppelbindungen kann dieser Schmierfilm auch noch weiter reagieren, beispielsweise zu harzigen, klebrigen Schichten, die mit herkömmlichen Reinigungsmitteln kaum noch zu entfernen sind.

US-4 936 917 erwähnt als trennwirksame Substanzen unter anderem Glycerinfettsäureester, zum Beispiel hydriertes Glyceryltristearat, die bei Einfülltemperatur der Form fest sein sollen. Diese festen trennwirksamen Substanzen können jedoch die oben beschriebenen Probleme des Polyharnstoffaufbaus in der Form, ausgelöst von wässrigen Trennmitteln, nicht beheben.

Aufgabe der vorliegenden Erfindung war es daher, wässrige Formtrennmittel zu finden, die frei sind von organischen Lösungsmitteln, die eine gute Trennwirkung zeigen, die Oberflächen der Polyurethan-Formkörper günstig beeinflussen, also feinporig, gleichmäßig und glatt hinterlassen, keinen Polyharnstoffaufbau auf den Formoberflächen hinterlassen, die Arbeitsumgebung nicht mit einem Schmierfilm verschmutzen und ein niedriges Allergiepotential haben.

Überraschenderweise wurde gefunden, dass eine Dispersion klassischer trennaktiver Substanzen wie Wachse, Seifen, Öle und/oder Siliconen in Mengen von 0,5 bis 40 Gew.-%, bevorzugt 3 bis 20 Gew.-%, zusammen mit Polyestern in Mengen von 0,1 bis 15 Gew.-%, bevorzugt 0,5 bis 10 Gew.-%, in Wasser, diese Aufgabe erfüllt.

Ein Gegenstand der Erfindung sind daher wässrige Dispersionen, enthaltend im Wesentlichen Wasser, trennaktive Mittel und Emulgatoren welche dadurch gekennzeichnet sind, dass als trennaktive Mittel eine Kombination aus
A) mindestens eines trennaktiven Mittels ausgesucht aus der Gruppe Seifen, Öle, Wachse und Silicone und
B) Polyester,
   verwendet wird, wobei die Mengen an trennaktivem Mittel, ausgesucht aus der Gruppe Seifen, Öle, Wachse und Silicone von 0,5 bis 40 Gew.-% und an Polyestern 0,1 bis 15 Gew.-% betragen.

Ein weiterer Gegenstand der Erfindung sind daher wässrige Dispersionen, enthaltend trennaktive Mittel, Emulgatoren und übliche Hilfs- und Zusatzmittel, welche dadurch gekennzeichnet sind, dass sie aus einer Kombination aus
A) 0,5 bis 40 Gew.-% mindestens eines trennaktiven Mittels ausgesucht aus der Gruppe Seifen, Öle, Wachse und Silicone und
B) 0,1 bis 15 Gew.-% Polyester,
C) 0,1 bis 10 Gew.-% Emulgatoren,
D) 0,1 bis 5 Gew.-% Katalysatoren,
E) 0,1 bis 5 Gew.-% Schaumstabilisatoren,
F) 0,1 bis 5 Gew.-% Viskositätsmodifizierer,
G) 0,1 bis 2 Gew.-% übliche Konservierungsmittel, Bakterizide, Fungizide und Antioxidantien und
H) ad 100 Gew.-% Wasser
bestehen.

Ein weiterer Gegenstand der Erfindung ist die Verwendung dieser Trennmittel bei der Herstellung von Polyurethan-Formkörpern.

Weitere Gegenstände der Erfindung sind durch die Ansprüche gekennzeichnet.

Als Polyester kommen in Frage Kondensationsprodukte aus mehrwertigen Alkoholen und einbasischen Fettsäuren, die gegebenenfalls substituiert sein können und/oder gegebenenfalls Doppelbindungen enthalten können.

Als Polyol wird mindestens eine Verbindung, ausgewählt aus der Gruppe der Diole insbesondere Monoethylenglycol, Diethylenglycol, Triethylenglycol, Tetraethylenglycol, Propylenglycol, Butylenglycol, Triole, insbesondere Trimethylolpropan, oder andere mehrwertige Polyole insbesondere Pentaerythrit, verwendet.

Als Fettsäuren sind die auf diesem Gebiet bekannten und üblichen einbasischen Fettsäuren auf Basis natürlicher pflanzlicher oder tierischer Fette und Öle mit 6 bis 22 Kohlenstoffatomen, insbesondere mit 14 bis 18 Kohlenstoffatomen, mit einer Kettenlänge von C₆ bis C₂₂, bevorzugt C₁₂ bis C₂₂ verwendbar, wie Capronsäure, Caprylsäure, Caprinsäure, Laurinsäure, Myristinsäure, Palmitinsäure, Palmitoleinsäure, Isostearinsäure, Stearinsäure, Ölsäure. Linolsäure, Petroselinsäure, Elaidinsäure, Arachinsäure, Behensäure, Eurucasäure, Gadoleinsäure, Rapsölfettsäure, Sojaölfettsäure, Sonnenblumenölfettsäure, Tallölfettsäure. Geeignet sind prinzipiell alle Fettsäuren mit ähnlicher Kettenverteilung, vorzugsweise Isostearinsäure oder Ölsäure. Die Molmasse der Ester ist bevorzugt 300 bis 2.000, insbesondere bevorzugt 500 bis 1.500, ganz besonders bevorzugt 1.000 bis 1.300.

Bevorzugt sind die Ester bei Raumtemperatur flüssig.

Die Ester sind neutrale Kondensationsprodukte mit möglichst niedriger Säurezahl, vorzugsweise < 5 mg KOH/g und Hydroxylzahl, vorzugsweise < 80 mg KOH/g.

Die bevorzugten Polyester sind besonders hautfreundlich und werden beispielsweise als kosmetische Öle eingesetzt, so dass keine Kontaktallergien zu erwarten sind.

Geeignete Polyester werden beispielsweise vertrieben unter den Handelsnamen Dub^{®} (Stearinerie Dubois), Prisorine^{®} (Uniqema) oder Crodamol^{®} (Croda).

Als klassische trennaktive Substanzen mit mittleren Molmassen größer als 200, bevorzugt 500, können in Mengen von 0,5 bis 40 Gew.-%, bevorzugt 2 bis 15 Gew.-% erfindungsgemäß beispielsweise mitverwendet werden:

Wachse, d.h. flüssige, feste, natürliche oder synthetische Wachse, auch oxidiert und/oder teilverseift, Ester von Carbonsäuren mit Alkoholen oder Fettalkoholen, Metallseifen, wie Alkali- oder Erdalkalimetallsalze von Fettsäuren, Öle, sowie bei Raumtemperatur flüssige oder zähfließende Kohlenwasserstoffe, gegebenenfalls aber nicht bevorzugt, unter Mitverwendung ungesättigter oligomere und/oder polymerer Kohlenwasserstoffe, Silicone, wie Polydimethylsiloxane, gegebenenfalls substituiert mit aliphatischen oder aromatischen Kolenwasserstoffresten.

Als übliche Hilfs- und Zusatzstoffe können ein oder mehrere Verbindungen ausgesucht aus der Gruppe
I) Emulgatoren:
   anionische Emulgatoren wie Alkylethercarboxylate, Alkylsulfate, Fettalkoholethoxylatethersulfate, alpha-Olefinsulfonate, Alkylphosphate, Alkylpolyetherphosphate, Alkylsulfosuccinate; nichtionische Emulgatoren wie ethoxylierte Fettalkohole, ethoxylierte Oxoalkohole und andere Alkoholether, Fettamine wie Dimethylalkylamine, Fettsäurealkanolamide, Fettsäureester mit Alkoholen, darunter auch Glycerinester oder Polyglycerinester oder Sorbitolester; kationische Emulgatoren wie sauer gestellte Alkyldimethylamine, quaternäre Stickstoffverbindungen; schließlich zwitterionische Tenside die in Mengen von 0,1 bis 10 Gew.-%, bevorzugt 0,5 bis 6 Gew.-% mitverwendet werden;
II) Katalysatoren:
   solche, die typischerweise für die Polyurethanreaktion verwendet werden. Beispielsweise Lewis Säuren wie Zinnverbindungen oder Lewis Basen wie tertiäre Amine;
III) Schaumstabilisatoren:
   Polysiloxan-Polyether-Copolymerisate;
IV) Viskositätsmodifizierer:
   typische Verdicker wie als Carbomere bezeichnete Polyacrylsäurederivate oder andere Polyelektrolytverdicker wie wasserlösliche Cellulosederivate oder auch Xanthan Gum. Als Viskositätsmodifizierer in wässrigen Formulierungen können auch aliphatische Kohlenwasserstoffe gesehen werden also Benzinfraktionen, die die eingesetzten Wachse aufquellen und so einen verdickenden Effekt zeigen;
V) übliche Konservierungsmittel, Bakterizide, Fungizide und Antioxidantien, verwendet werden.

Die erfindungsgemäßen Dispersion können nach den im Stand der Technik bekannten Verfahren hergestellt werden. Bevorzugt geht man so vor, dass der Emulgator mit trennaktiven Substanzen in geschmolzener Form (unterhalb der Siedetemperatur des Wassers) vorgelegt wird, scherkraftreich ein Teil des Wassers eingetragen wird, dann das restliche Wasser, enthaltend die weiteren Komponenten, scherkraftarm zugegeben wird.

Klassischerweise wird die Form auf die gewünschte Formtemperatur von 45 bis 80 °C, bevorzugt 50 bis 75 °C, gebracht, mit Trennmittel eingesprüht, eine gewisse Zeit - je nach Wasseranteil ca. 1 bis 10 Minuten - gewartet, bis die größte Menge Wasser verdampft ist, und dann das reaktive Polyurethansystem aus Polyolen, Polyisocyanaten und gegebenenfalls weiteren Additiven wie Katalysatoren, Schaumstabilisatoren und Treibmitteln, eingepumpt. Die Form wird geschlossen und nach der Aushärtezeit geöffnet und das Formteil entformt.

### Beispiele:

Die folgenden Beispiele dienen zur näheren Beschreibung der Erfindung, ohne sie darauf einzuschränken.

### Liste der eingesetzten Substanzen:

- Dub^{®} PG V = Propylenglycoltetraoleat, Hersteller: Stearinerie Dubois,
- Prisorine^{®} 3631 = Pentaerythrittetraisostearate, Hersteller: Uniqema,
- DC^{®} 190 = Polyethersiloxan, Hersteller: Air Products,
- Polyol^{®} 130 = Polybutadien mit mittlerer Molmasse von ca. 3.000 und Iodzahl von ca. 450 g Jod/100 g, Hersteller: Degussa,
- Unithox^{®} 450 = ethoxylierter Alkohol mit mittlerer Molmasse ca. 900, enthaltend 50 Gew.-% Ethylenoxid entsprechend dem in Beispiel 1 aus DE-A-40 20 036 Verwendeten, Hersteller: Baker Petrolite,
- Fettamin = R-NH₂ mit R = C₁₂₋₂₂ gegebenenfalls verzweigter Alkylrest,
- Mikrowachs = handelsübliche Wachse mit einer Erstarrungstemperatur von 50 bis 90 °C,
- Polyethylenwachs = handelsübliche Wachse mit einer Erstarrungstemperatur von 50 bis 90 °C,
- Desmophen^{®} PU 21IK01 = Polyetherpolyol, Hersteller: Bayer,
- Tegoamin^{®} TA 33, Hersteller: Degussa,
- Tegoamin^{®} AS-1, Hersteller: Degussa,
- Tegostab^{®} EP-K-38 = organomodifiziertes Siloxan, Hersteller: Degussa,
- Suprasec^{®} 2412 = Diphenylmethan-4,4'-diisocyanat, Hersteller: Huntsman.

### Beispiel 1

### Trennmittel 1:

1 Gew.-% Polyethylenwachs (Erstarrungspunkt 60 °C), 5 Gew.-% Mikrowachs (Erstarrunqspunkt 70 °C), 1 Gew.-% Fettamin, 0,02 Gew.-% Essigsäure (60 % in Wasser), 3 Gew.-% Dub^{®} PG V, 1 Gew.-% DC^{®} 190, 88,98 Gew.-% Wasser.

### Beispiel 2

### Trennmittel 2:

1 Gew.-% Polyethylenwachs (Erstarrungspunkt 60 °C), 5 Gew.-% Mikrowachs (Erstarrungspunkt 70 °C), 1 Gew.-% Fettamin, 0,02 Gew.-% Essigsäure (60 % in Wasser), 10 Gew.-% Dub^{®} PG V, 1 Gew.-% DC^{®} 190, 81,98 Gew.-% Wasser.

### Beispiel 3

### Trennmittel 3:

1 Gew.-% Polyethylenwachs (Erstarrungspunkt 60 °C), 5 Gew.-% Mikrowachs (Erstarrungspunkt 70 °C), 1 Gew.-% Fettamin, 0,02 Gew.-% Essigsäure (60 % in Wasser), 2 Gew.-% Prisorine^{®} 3631, 1 Gew.-% DC^{®} 190, 89,98 Gew.-% Wasser.

### Beispiel 4

### Trennmittel 4:

1 Gew.-% Polyethylenwachs (Erstarrungspunkt 60 °C), 5 Gew.-% Mikrowachs (Erstarrungspunkt 70 °C), 1 Gew.-% Fettamin, 0,02 Gew.-% Essigsäure (60 % in Wasser), 8 Gew.-% Prisorine^{®} 3631, 1 Gew.-% DC^{®} 190, 83,98 Gew.-% Wasser.

Vergleichsbeispiel A: (angelehnt an Beispiel Nr. 1 aus DE-A-40 20 036)

16 Gew.-% Polyol^{®} 130, 4 Gew.-% Unithox^{®} 450, 1 Gew.-% DC^{®} 190, 79 Gew.-% Wasser.

### Trennmittelversuche:

Die Trennmittel wurden mittels einer 0,5 mm Düse in praxisnahen Mengen von 20 g/m² auf Testmetallplatten aufgesprüht und ein schäumbares Polyurethansystem bestehend aus 100 Teilen Desmophen^{®} PU 21IK01, 3,5 Teilen Wasser, 0,4 Teilen Tegoamin^{®} TA 33, 0,25 Teilen Tegoamin^{®} AS-1, 0,7 Teilen Diethanolamin, 0,5 Teilen Tegostab^{®} EP-K-38, 0,2 Teilen Essigsäure (60 % in Wasser), 63,5 Teilen Suprasec^{®} 2412 auf diese Platten in einer Kastenform bei 55 °C aufgeschäumt.

Nach dem Aushärten (10 Minuten) wurden die Metallplatten unter Verwendung eines Federkraftmessers vom Schaum abgezogen, um ein Maß für die Trennwirkung zu messen.

Bewertung der Trennversuche:

| Trennmittel | Kraft zum Abziehen der Metallplatte vom Schaum [kg] | Beurteilung der Schaumoberfläche |
|---|---|---|
| 1 | 3,0 | leicht geschlossen, trocken |
| 2 | 2,8 | leicht geschlossen, trocken |
| 3 | 2,1 | leicht geschlossen, trocken |
| 4 | 2,3 | leicht geschlossen, trocken |
| A | 2,0 | leicht geschlossen, schmierig |

## Patentansprüche

1. Wässrige Dispersionen, enthaltend im Wesentlichen Wasser, trennaktive Mittel und Emulgatoren, **dadurch gekennzeichnet, dass** als trennaktive Mittel eine Kombination aus
A) mindestens einem trennaktiven Mittel, ausgesucht aus der Gruppe Seifen, Öle, Wachse und Silicone und
B) Polyestern,
verwendet wird, wobei die Mengen an trennaktivem Mittel, ausgesucht aus der Gruppe Seifen, Öle, Wachse und Silicon von 0,5 bis 40 Gew.-% und an Polyestern 0,1 bis 15 Gew.-% betragen.

2. Wässrige Dispersionen gemäß Anspruch 1, enthaltend
A) 0,5 bis 40 Gew.-% mindestens eines trennaktiven Mittels ausgesucht aus der Gruppe Seifen, Öle, Wachse und Silicone und
B) 0,1 bis 15 Gew.-% Polyester,
C) 0,1 bis 10 Gew.-% Emulgatoren,
D) 0,1 bis 5 Gew.-% Katalysatoren,
E) 0,1 bis 5 Gew.-% Schaumstabilisatoren,
F) 0,1 bis 5 Gew.-% Viskositätsmodifizierer,
G) 0,1 bis 2 Gew.-% übliche Konservierungsmittel, Bakterizide, Fungizide und Antioxidantien und
H) ad 100 Gew.-% Wasser.

3. Wässrige Dispersionen gemäß einem der Ansprüche 1 oder 2, **dadurch gekennzeichnet, dass** die trennaktiven Mittel A) eine mittlere Molmasse > 200 aufweisen.

4. Wässrige Dispersionen gemäß mindestens einem der Ansprüche 1 bis 3, **dadurch gekennzeichnet, dass** als trennaktive Mittel A) mindestens eine Verbindung ausgesucht aus der Gruppe der flüssigen, festen, natürlichen oder synthetischen Wachse, Öle, Ester von Carbonsäuren mit Alkoholen oder Fettalkoholen, Metallseifen, Silicone, mitverwendet wird.

5. Wässrige Dispersionen gemäß mindestens einem der Ansprüche 1 bis 4, **dadurch gekennzeichnet, dass** als Polyester B) flüssiger Polyester mit einer Molmasse von 300 bis 2.000 verwendet wird.

6. Wässrige. Dispersionen gemäß mindestens einem der Ansprüche 1 bis 5, **dadurch gekennzeichnet, dass** als Polyester B) flüssiger Polyester mit einer Säurezahl < 5 mg KOH/g und einer Hydroxylzahl < 80 mg KOH/g Substanz verwendet wird.

7. Wässrige Dispersionen gemäß mindestens einem der Ansprüche 1 bis 6, **dadurch gekennzeichnet, dass** als Polyester B) ein Kondensationsprodukt aus mindestens einem Polyol ausgewählt aus der Gruppe der Diole insbesondere Monoethylenglycol, Diethylenglycol, Triethylenglycol, Tetraethylenglycol, Propylenglycol, Butylenglycol, Triole, insbesondere Trimethylolpropan, oder andere mehrwertige Polyole insbesondere Pentaerythrit und mindestens einer Fettsäure ausgewählt aus der Gruppe der einbasischen Fettsäuren insbesondere Capronsäure, Caprylsäure, Caprinsäure, Laurinsäure, Myristinsäure, Palmitinsäure, Palmitoleinsäure, Isostearinsäure, Stearinsäure, Ölsäure. Linolsäure, Petroselinsäure, Elaidinsäure, Arachinsäure, Behensäure, Eurucasäure, Gadoleinsäure, Rapsölfettsäure, Sojaölfettsäure, Sonnenblumenölfettsäure, Tallölfettsäure, verwendet wird.

8. Wässrige Dispersionen gemäß mindestens einem der Ansprüche 1 bis 7, **dadurch gekennzeichnet, dass** als Emulgator C) mindestens eine Verbindung ausgesucht aus der Gruppe der anionischen, kationischen, zwitterionischen und nichtionischen Tenside verwendet wird.

9. Verwendung der Trennmittel gemäß mindestens einem der Ansprüche 1 bis 8 zur Herstellung von Polyurethan-Formkörpern.

## Claims

1. Aqueous dispersions containing substantially water, agents having release activity and emulsifiers **characterized in that** a combination of
A) at least one agent having release activity, selected from the group consisting of soaps, oils, waxes and silicones, and
B) polyesters
is used as the agent having release activity, wherein the amounts of agent having release activity, selected from the group consisting of soaps, oils, waxes and silicones, are from 0.5 to 40% by weight and the amounts of polyesters are from 0.1 to 15% by weight.

2. Aqueous dispersions according to Claim 1, containing
A) from 0.5 to 40% by weight of at least one agent having release activity, selected from the group consisting of soaps, oils, waxes and silicones, and
B) from 0.1 to 15% by weight of polyesters,
C) from 0.1 to 10% by weight of emulsifiers,
D) from 0.1 to 5% by weight of catalysts,
E) from 0.1 to 5% by weight of foam stabilizers,
F) from 0.1 to 5% by weight of viscosity modifiers,
G) from 0.1 to 2% by weight of customary preservatives, bactericides, fungicides and antioxidants and
H) water to 100% by weight.

3. Aqueous dispersions according to either of Claims 1 or 2, **characterized in that** the agents A) having release activity have an average molar mass of > 200.

4. Aqueous dispersions according to at least one of Claims 1 to 3, **characterized in that** at least one compound selected from the group consisting of the liquid, solid, natural or synthetic waxes, oils, esters of carboxylic acids with alcohols or fatty alcohols, metal soaps and silicones is concomitantly used as agents A) having release activity.

5. Aqueous dispersions according to at least one of Claims 1 to 4, **characterized in that** liquid polyester having a molar mass of from 300 to 2000 is used as polyester B).

6. Aqueous dispersions according to at least one of Claims 1 to 5, **characterized in that** liquid polyester having an acid number of < 5 mg KOH/g and a hydroxyl number of < 80 mg KOH/g of substance is used as polyester B).

7. Aqueous dispersions according to at least one of Claims 1 to 6, **characterized in that** a condensate of at least one polyol selected from the group consisting of the diols, in particular monoethylene glycol, diethylene glycol, triethylene glycol, tetraethylene glycol, propylene glycol, butylene glycol, triols, in particular trimethylol propane, or other polyhydric polyols, in particular pentaerythritol, and at least one fatty acid selected from the group consisting of the monobasic fatty acids, in particular caproic acid, caprylic acid, capric acid, lauric acid, myristic acid, palmitic acid, palmitoleic acid, isostearic acid, stearic acid, oleic acid, linoleic acid, petroselinic acid, elaidic acid, arachidic acid, behenic acid, erucic acid, gadoleic acid, rapeseed oil fatty acid, soybean oil fatty acid, sunflower oil fatty acid and tall oil fatty acid, is used as polyester B).

8. Aqueous dispersions according to at least one of Claims 1 to 7, **characterized in that** at least one compound selected from the group consisting of the anionic, cationic, zwitterionic and nonionic surfactants is used as emulsifier C).

9. Use of the release agents according to at least one of Claims 1 to 8 for the production of polyurethane moldings.

## Revendications

1. Dispersions aqueuses, contenant essentiellement de l'eau, des agents actifs en démoulage et des émulsifiants, **caractérisées en ce qu'**on utilise, comme agents actifs en démoulage, une combinaison
A) d'au moins un agent actif en démoulage choisi dans le groupe formé par les savons, les huiles, les cires et les silicones et
B) de polyesters,
les quantités d'agent actif en démoulage, choisi dans le groupe formé par les savons, les huiles, les cires et les silicones, étant de 0,5 à 40% en poids et de polyesters étant de 0,1 à 15% en poids.

2. Dispersions aqueuses selon la revendication 1, contenant
A) 0,5 à 40% en poids d'au moins un agent actif en démoulage, choisi dans le groupe formé par les savons, les huiles, les cires et les silicones et
B) 0,1 à 15% en poids de polyester,
C) 0,1 à 10% en poids d'émulsifiants,
D) 0,1 à 5% en poids de catalyseurs,
E) 0,1 à 5% en poids de stabilisateurs de mousse,
F) 0,1 à 5% en poids d'agents de modification de la viscosité,
G) 0,1 à 2% en poids de conservateurs, de bactéricides, de fongicides et d'antioxydants usuels et
H) ad 100% en poids d'eau.

3. Dispersions aqueuses selon l'une quelconque des revendications 1 ou 2, **caractérisées en ce que** les agents actifs en démoulage A) présentent une masse molaire moyenne > 200.

4. Dispersions aqueuses selon au moins l'une quelconque des revendications 1 à 3, **caractérisées en ce qu'**on utilise conjointement comme agent actif en démoulage A) au moins un composé choisi dans le groupe formé par les cires liquides, solides, naturelles ou synthétiques, les huiles, les esters d'acides carboxyliques avec des alcools ou des alcools gras, les savons métalliques, les silicones.

5. Dispersions aqueuses selon au moins l'une quelconque des revendications 1 à 4, **caractérisées en ce qu'**on utilise comme polyester B) du polyester liquide présentant une masse molaire de 300 à 2000.

6. Dispersions aqueuses selon au moins l'une quelconque des revendications 1 à 5, **caractérisées en ce qu'**on utilise comme polyester B) du polyester liquide présentant un indice d'acide < 5 mg de KOH/g et un indice d'hydroxyle < 80 mg de KOH/g de substance.

7. Dispersions aqueuses selon au moins l'une quelconque des revendications 1 à 6, **caractérisées en ce qu'**on utilise comme polyester B) un produit de condensation d'au moins un polyol choisi dans le groupe des diols, en particulier le monoéthylèneglycol, le diéthylèneglycol, le triéthylèneglycol, le tétraéthylèneglycol, le propylèneglycol, le butylèneglycol, des triols, en particulier le triméthylolpropane, ou d'autres polyols polyvalents, en particulier le pentaérythritol et d'au moins un acide gras, choisi dans le groupe des acides gras monobasiques, en particulier l'acide caproïque, l'acide caprylique, l'acide caprique, l'acide laurique, l'acide myristique, l'acide palmitique, l'acide palmitoléique, l'acide isostéarique, l'acide stéarique, l'acide oléique, l'acide linoléique, l'acide pétrosélique, l'acide élaïdique, l'acide arachidique, l'acide béhénique, l'acide érucique, l'acide gadoléique, l'acide gras d'huile de colza, l'acide gras d'huile de soja, l'acide gras d'huile de tournesol, l'acide gras d'huile de suif.

8. Dispersions aqueuses selon au moins l'une quelconque des revendications 1 à 7, **caractérisées en ce qu'**on utilise comme émulsifiant C) au moins un composé choisi dans le groupe des agents tensioactifs anioniques, cationiques, zwittérioniques et non ioniques.

9. Utilisation de l'agent de démoulage selon au moins l'une quelconque des revendications 1 à 8 pour la réalisation de corps façonnés en polyuréthane.
